# EUROPÄISCHE PATENTANMELDUNG

(11) **EP 1 524 104 A1**
(43) Veröffentlichungstag der Anmeldung: **20.04.2005**
(21) Anmeldenummer: 04023310.8
(22) Anmeldetag: 30.09.2004
(51) Int. Cl.: B32B 17/06, B32B 3/18, B32B 3/26, B32B 7/06

(54) **Bearbeitungsverbund für ein Substrat**

(30) Priorität: 18.10.2003 DE 10348946
(71) Anmelder: Schott AG, 55122 Mainz (DE); Koninklijke Philips Electronics N.V., 5621 BA Eindhoven (NL)
(72) Erfinder: Hermens, Harrie, 6416 SG Herleen (NL); Plichta, Armin, Dr., 55595 Sponheim (DE); Zetterer, Thomas, Dr., 55270 Engelstadt (DE); Van Bommel, Mark, 5656 AA Eindhoven (NL)
(74) Vertreter: Sawodny, Michael-Wolfgang, Dr. Dipl.-Phys.

(57) **Zusammenfassung**

Die Erfindung betrifft einen Verbund, umfassend ein Substrat, insbesondere ein Dünnstsubstrat mit einer Dicke von weniger als 0,3 mm, und ein Trägersubstrat, wobei das Substrat zumindest mittelbar mit dem Trägersubstrat lösbar verbunden ist.

Der erfindungsgemäße Verbund ist dadurch gekennzeichnet, dass zwischen Substrat und Trägersubstrat eine Abstandsschicht mit Aussparungen eingebracht ist, wobei die Aussparungen zumindest in der Oberfläche der Abstandsschicht vorgesehen sind, welche dem Substrat zugewandt ist.

## Beschreibung

Die vorliegende Erfindung betrifft einen Verbund, welcher ein Substrat, insbesondere Dünnstsubstrat, und ein Trägersubstrat umfasst. Dabei sind das Substrat und das Trägersubstrat miteinander verbunden, um so eine stabile selbsttragende Struktur zu schaffen. Mit Dünnstsubstrat werden nachfolgend insbesondere Substrate bezeichnet, beispielsweise aus Glas oder einem glashaltigen Werkstoff, welche eine Dicke von weniger als 0,3 mm aufweisen.

In der Displayindustrie werden gegenwärtig Gläser der Dicken 0,3 - 2 mm standardmäßig zum Herstellung von Displays verwendet. Insbesondere für Displays für Mobiltelefone, PDAs werden Glasdicken von 0,7 mm und 0,5 mm (0,4 mm) eingesetzt. Diese Gläser sind steif und selbsttragend und die Anlagen zur Displayherstellung sind auf diese Dicken optimiert.

Will man jedoch Dünnstsubstrate mit Dicken kleiner 0,3 mm, wie z. B. Glas- oder Polymerfolien, für digitale oder analoge Anzeigen verwenden, die beispielsweise den Vorteil haben, dass sie biegbar sind, so können derartige Dünnstsubstrate in herkömmlichen Prozessen nicht mehr prozessiert werden, da sich die Substratflächen unter ihrem Eigengewicht stark durchbiegen, was als sagging bezeichnet wird. Des weiteren sind diese Dünnstsubstrate sehr empfindlich gegen zu starke mechanische Belastungen. Als Folge hiervon können die Glassubstrate bei unterschiedlichen Prozessschritten beschädigt werden, z. B. brechen, beispielsweise beim Waschprozess oder bei Beschichtungen aus der Flüssigphase. Weitere Quellen für eine Beschädigung sind mechanisches Verkanten oder Anstoßen. Auch besteht die Gefahr, dass die Dünnstsubstrate in den herkömmlichen Prozessen hängen bleiben, z. B. beim automatischen Substrattransport zwischen unterschiedlichen Fertigungsschritten. Durch das Verbiegen der Dünnstsubstrate können auch Toleranzanforderungen von Prozessen verletzt werden, beispielsweise die Ebenheitsanforderungen von Belichtungsprozessen, was zu einer Verschlechterung in den Abbildungseigenschaften führen kann. Die Belichtungsprozesse können z. B.

Lithographieprozesse oder Maskenbelichtungsprozesse sein. Des Weiteren neigen dünne flexible Substrate zu signifikanten Eigenschwingungen durch Aufnahme bzw. Anregungen von Raum- und Körperschall aus der Umgebung.

Andererseits ist es wünschenswert, dünnere, leichtere, gebogene bzw. biegbare Displays zur Verfügung zu stellen. Dies lässt sich durch die Verwendung von Dünnstsubstraten erreichen, die Dicken < 0,3 mm haben.

Allerdings ergeben sich für die Handhabung von Dünnstsubstraten in konventionellen Anlagen zur Displayherstellung aus zuvor beschriebenen Gründen Probleme.

Es ist bekannt, entsprechende Substrate zusammen mit einem Trägersubstrat zu einem Verbund miteinander zu befestigen, um so zu einer selbsttragenden Struktur zu gelangen. Es verbleibt jedoch das Problem, dass das Dünnstsubstrat, ohne es zu beschädigen vom Trägersubstrat wieder entfernt werden muss, um die prozessierten Dünnstsubstrate zu vereinzeln.

Der Erfindung liegt die Aufgabe zugrunde, die Nachteile des Standes der Technik zu überwinden und einen Verbund anzugeben, der die Handhabung, Bearbeitung und den Transport von Substraten, insbesondere Dünnstsubstraten, erleichtert, insbesondere soll er eine Vereinzelung ermöglichen, ohne das Dünnstsubstrat zu beschädigen. Des weiteren soll hierfür der operative Aufwand möglichst gering sein.

Diese Aufgabe wird durch einen Verbund gemäß Anspruch 1 gelöst. Die abhängigen Ansprüche beschreiben besonders vorteilhafte Weiterbildungen der Erfindung.

Gemäß des Anspruchs 1 umfasst der erfindungsgemäße Verbund ein Substrat, insbesondere Dünnstsubstrat, und ein Trägersubstrat. Das Substrat ist mit dem Trägersubstrat verbunden. Dabei kann die Verbindung unmittelbar zwischen Substrat und Trägersubstrat ausgeführt sein, es kommen jedoch auch mittelbare Verbindungen in Betracht. Die Verbindung ist vorteilhaft lösbar ausgeführt.

Gemäß der Erfindung ist eine Abstandsschicht zwischen Dünnstsubstrat und dem Trägersubstrat eingebracht, die mit Aussparungen versehen ist. Dabei sind die Aussparungen zumindest in der Oberfläche der Abstandsschicht vorgesehen, welche dem Substrat, insbesondere dem Dünnstsubstrat mit einer Dicke von weniger als 0,3 mm, zugewandt ist.

Durch die erfindungsgemäße Zwischenschaltung einer Abstandsschicht zwischen Substrat und Trägersubstrat wird einerseits wirkungsvoll eine Durchbiegung oder Beschädigung des Substrats verhindert. Andererseits ermöglicht die gezielte Auswahl einer Abstandsschicht mit vorgegebener Dicke, dass eine gewünschte Gesamtdicke des Verbundes eingestellt wird. Insbesondere kann eine konstante Gesamtdicke des Verbundes trotz variierender Dicke von Substraten durch entsprechende Anpassung der Abstandsschicht eingehalten werden. Dies ist besonders bei der vorteilhaften Verwendung des erfindungsgemäßen Verbundes in der LCD-Herstellung, insbesondere beim Front-End LCD-Processing, günstig, da hier trotz variierender Substratdicke die Substrate in konventionellen Anlagen, welche eine Standarddicke verlangen, bearbeitet werden können. Selbstverständlich ist es auch möglich - und bei einer sehr dünn ausgeführten Abstandsschicht vorzuziehen -, die Gesamtdicke des Verbundes alternativ oder zusätzlich durch Variation der Dicke des Trägersubstrats einzustellen.

Durch die erfindungsgemäße Ausbildung der Abstandsschicht mit Aussparungen, zumindest auf der Oberfläche der Abstandsschicht, welche dem Substrat zugewandt ist, kann das Substrat nach der Bearbeitung besonders leicht vom Trägersubstrat getrennt werden, da adhäsive Anziehungskräfte von Dünnstsubstrat und Trägersubstrat, beispielsweise Van der Waals-Kräfte unter Verwendung einer Abstandsschicht mit Aussparungen gering sind. Im Gegensatz hierzu neigen bei Verbunden aus Dünnstsubstrat und Trägersubstrat, bei denen die Abstandsschichten ohne Aussparungen ausgebildet sind, sie Substrate, insbesondere die Dünnstsubstrate dazu, beim Abheben durchzubrechen oder sich unzulässig verformen, da die Adhäsionskräfte zwischen Substrat und Abstandsschicht sehr groß sind.

Die Verwendung des erfindungsgemäßen Verbundes ist jedoch nicht auf die LCD-Herstellung beschränkt. Der erfindungsgemäße Verbund kann beispielsweise in einem der nachfolgenden Bereiche verwendet werden:
- in der Displayindustrie
- zur Herstellung optoelektronischer Bauteile
- in der Optoelektronik
- in der Polymerelektronik
- in der Photovoltaik
- in der Sensorik
- in der Biotechnologie
- Medizin (medizinische Anwendungen).

Eine besonders leicht herzustellende Ausführung eines Verbundes umfasst Aussparungen in der Abstandsschicht, welche als Durchgangsöffnungen ausgeführt sind, das heißt, die Aussparungen erstrecken sich von einer ersten Oberfläche der Abstandsschicht bis zu einer zweiten Oberfläche der Abstandsschicht. Die erste Oberfläche der Abstandsschicht ist die Oberfläche, welche dem Substrat zugewandt ist, und die zweite Oberfläche ist dann diejenige, welche dem Trägersubstrat zugewandet ist. Bei Ausgestaltung der Aussparungen als Durchgangsöffnungen werden die Adhäsionskräfte beim Abheben des Substrats von dem Trägersubstrat nach der Verarbeitung oder dem Transport besonders leicht überwunden.

Eine Abstandsschicht mit Durchgangsöffnungen kann beispielsweise dadurch erreicht werden, dass die Abstandsschicht aus einer Vielzahl von zueinander mit Abstand angeordneten Abstandsstücken ausgebildet wird. Wenn dabei vom Abstand zueinander die Rede ist, so ist hiermit der Abstand in einer Ebene gemeint, welche äquiplanar zu der Substratebene ist.

Die Abstandsschicht kann beispielsweise als Gitternetzstruktur ausgebildet sein oder auch als flächige Schicht mit einer Vielzahl von Durchgangsbohrungen. Selbstverständlich sind beliebige Mischformen denkbar.

Als besonders günstig hat sich als Abstandsschicht auch eine Vielzahl von parallel zueinander mit Abstand angeordneten Stäben herausgestellt. Die Stäbe können einen kreisrunden, einen ovalen, einen rechteckigen oder quadratischen Querschnitt aufweisen. Die Abstandsschicht kann beispielsweise auch aus einer Vielzahl von mit Abstand zueinander angeordneten Kugeln ausgebildet sein, welche insbesondere durch Distanzstäbe miteinander verbunden sind.

Die zu überwindende Adhäsionskraft beim Abheben des Substrats von der Abstandsschicht kann durch das Verhältnis der Gesamtfläche der Aussparungen zu der Gesamtfläche der dem Dünnstsubstrat zugewandten Oberfläche der Abstandsschicht eingestellt werden.

In einer Ausführungsform weisen die Durchgangsöffnungen der Abstandsschicht, ausgehend von der dem Substrat zugewandten Oberfläche bis zu der dem Trägersubstrat zugewandten Oberfläche, einen gleichförmigen Querschnitt auf. Der entsprechende Querschnitt kann jedoch auch konisch ausgeführt sein. Beispielsweise ist es denkbar, dass sich der Querschnitt in der genannten Richtung, das heißt ausgehend von der Oberfläche der Abstandsschicht, die dem Substrat zugewandet ist, konisch erweitert. Hierdurch ist es möglich, einerseits die Auflagefläche des Substrats, insbesondere des Dünnstsubstrats, relativ groß zu gestalten, um so eine Durchbiegung zu verhindern, wobei gleichzeitig die aufzubringenden Adhäsionskräfte beim Abheben des Substrats gering sind, da entsprechend Luft durch die konisch erweiterten Querschnitte einströmen kann.

Die Abstandsschicht kann vorteilhaft aus Kunststoff beziehungsweise einem Polymer oder einem Werkstoff hergestellt sein, der Kunststoff oder Polymer enthält.

Das Trägersubstrat ist besonders vorteilhaft aus Glas oder einem glashaltigen Werkstoff hergestellt.

Der Verbund weist beispielsweise eine Gesamtdicke von 0,4 mm bis 1,1 mm auf. Besonders vorteilhaft ist es, wenn der Verbund eine Gesamtdicke von 0,5 mm aufweist, da dies der genannten Standarddicke von konventionellen LCD-Herstellungslinien entspricht.

Die Abstandsschicht des erfindungsgemäßen Verbundes ist vorteilhaft derart als Austauschteil mit variierender Dicke ausgebildet, dass bei variierender Substratdicke durch entsprechende Auswahl der Abstandsschicht die Gesamtdicke des Verbundes unverändert bleibt.

Eine Möglichkeit der Verbindung der einzelnen Schichten des erfindungsgemäßen Verbundes besteht darin, das Substrat, insbesondere das Dünnstsubstrat, lösbar mit der Abstandsschicht zu verbinden und die Abstandsschicht lösbar mit dem Trägersubstrat zu verbinden. Die Abstandsschicht kann jedoch alternativ auch unlösbar mit dem Trägersubstrat verbunden sein, wobei dann insbesondere die Abstandsschicht zusammen mit dem Trägersubstrat das entsprechende Austauschteil zur Einstellung einer unveränderten Gesamtdicke des Verbundes darstellt.

In einer weiteren Ausführung oder zusätzlich ist es möglich, das Substrat, insbesondere das Dünnstsubstrat, direkt mit dem Trägersubstrat lösbar zu verbinden.

Durch die erfindungsgemäße Ausbildung des Verbundes ist es möglich, ein Substrat mittelbar oder unmittelbar mit einem Trägersubstrat zu verbinden, wobei die Abstandsschicht zwischengeschaltet wird. Anschließend kann das Substrat, insbesondere das Dünnstsubstrat, bearbeitet und/oder behandelt und/oder transportiert werden. Nach Abschluss der Bearbeitung/Behandlung beziehungsweise des Transportes kann das Substrat wieder vom Trägersubstrat gelöst werden, wobei, wie dargestellt, die erfindungsgemäße Ausbildung der Abstandsschicht mit Aussparungen dafür sorgt, dass die Adhäsionskräfte gering sind.

Zum Verbinden können Klebeverfahren oder thermische Verbindungsverfahren verwendet werden. Beispielsweise kann das Substrat auf das Trägersubstrat aufgeschmolzen werden. Eine Möglichkeit besteht darin, auf dem Rand eines Trägersubstrates (bzw. des Dünnstsubstrates) einen dünnen Streifen Kleber aufzudosieren, die Abstandsschicht aufzubringen und abschließend das Dünnstsubstrat (bzw. das Trägersubstrat) derart in Kontakt zu bringen, dass die umlaufende Verklebung eine Verbindung zwischen Dünnstsubstrat und Trägersubstrat bewirkt. Alternativ kann auch die umlaufende Kleberschicht durch ein Tauchverfahren entweder auf dem Rand des Trägersubstrates oder des Dünnstsubstrates hergestellt werden. Als Kleber kommen in diesen Fällen beispielsweise einfache bei Raumtemperatur aushärtende Kleber, oder bei höheren Temperaturen (typ. 200°C bis 600°C) anwendbare thermisch aushärtbare Kleber, UV-härtende Kleber oder z.B. Glaslote in Betracht.

Eine weitere Verbindungsmethodik besteht darin, das Dünnstsubstrat mit dem Trägersubstrat z.B. durch Laserstrahlung lokal aufzuschmelzen und über die erzielte Schmelze miteinander zu verbinden. Wird hier der lokal stattfindende Schmelzprozess durch eine entsprechend steuerbare Optik oder Mechanik ergänzt, können auch hier umlaufende Verbindungsnähte hergestellt werden, die zu einer entsprechenden Verbindung zwischen Dünnstsubstrat und Trägersubstrat führen.

Zur Trennung nach der Bearbeitung kann herkömmliche LCD-Trennungstechnologie verwendet werden. Insbesondere, wenn das Trägersubstrat aus Glas ausgeführt ist, kann dieses dadurch vom Dünnstsubstrat entfernt werden, dass es zunächst geritzt wird und anschließend durch Biegung entlang des Ritzes gebrochen wird.

Durch den erfindungsgemäßen Verbund ist es möglich, Substrate mit variierender Dicke in konventionellen Anlagen, insbesondere zur LCD-Herstellung, zu bearbeiten. Durch entsprechende Auswahl der Dicke der Abstandsschicht und/oder des Trägersubstrats können leicht geforderte Standarddicken des Verbundes erreicht werden. Eine Umstellung der Produktionslinien auf eine neue Dicke ist nicht erforderlich. Der Verbund kann in praktisch allen Fertigungsanlagen einer z.B. Displayfertigung (insbesondere in Passive Matrix (PM)- und in Active Matrix (AM)-LCD-Herstellungsanlagen) verwendet werden, die auf die Abmessungen (Format und Dicke) des Verbundes ausgelegt sind.

Eine besonders vorteilhafte Ausführung der Abstandsschicht wird dadurch hergestellt, dass kleine Kugeln mit einem dem gewünschten Abstand entsprechenden Durchmesser, beispielsweise mit einem Durchmesser von 6 µm, welche insbesondere den in der LCD-Industrie verwendeten Spacerkügelchen entsprechen, als Abstandshalter auf das Trägersubstrat oder das (Dünnst-) Substrat aufgestreut werden. Diese Kugeln können aus beliebigem Material bestehen, solange dadurch die optischen und sonstigen Eigenschaften des Substrats nicht negativ beeinflusst werden. Besonders geeignet sind beispielsweise Kügelchen aus Glas oder Polymer beziehungsweise einem glasoder polymerhaltigen Werkstoff. Anschließend können das (Dünnst-) Substrat und das Trägersubstrat miteinander verbunden werden. Eine Einstellung der Gesamtdicke des Verbundes mit einer Abstandsschicht aus aufgestreuten Kügelchen erfolgt vorteilhaft durch Einstellung der Dicke des Trägersubstrats.

Nachfolgend soll die Erfindung anhand einiger Ausführungsbeispiele näher erläutert werden.

Es zeigen:
- Figur 1: einen Querschnitt durch einen erfindungsgemäß gestalteten Verbund;
- Figur 2: eine Draufsicht auf verschiedene Ausführungen einer Abstandsschicht für einen erfindungsgemäßen Verbund;
- Figur 3: verschiedene Ausführungen eines Querschnitts durch eine Abstandsschicht eines erfindungsgemäßen Verbunds;
- Figur 4: einen Verbund mit einer als Rahmen ausgebildeten Abstandsschicht.

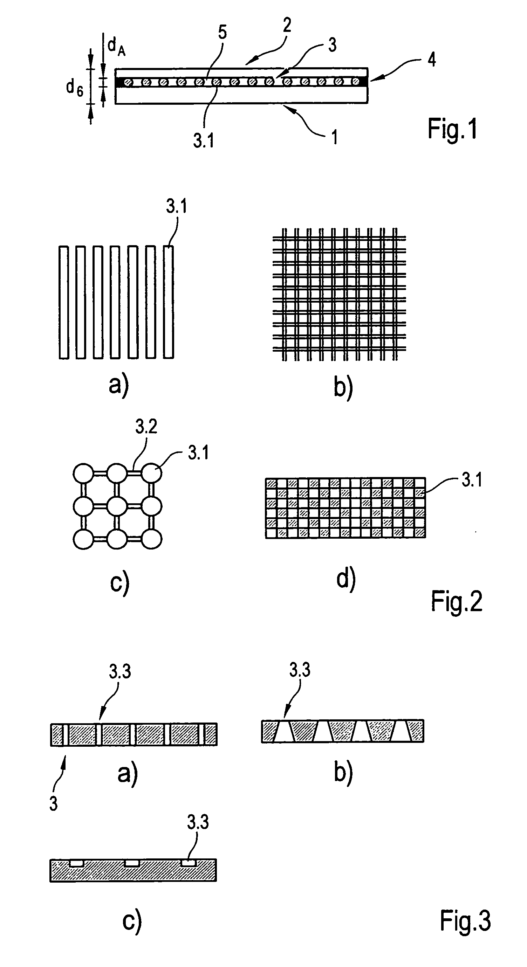

In der Figur 1 erkennt man ein Trägersubstrat 1, mit welchem ein Dünnstsubstrat 2 verbunden ist. Das Dünnstsubstrat weist eine Dicke auf, welche erheblich geringer ist als die des Trägersubstrats. Das Dünnstsubstrat kann beispielsweise ein flexibles Substrat zur LCD-Displayherstellung sein. Zwischen dem Dünnstsubstrat und dem Trägersubstrat ist erfindungsgemäß eine Abstandsschicht 3 vorgesehen. Die Abstandsschicht 3 besteht aus einzelnen Abstandsstücken 3.1, die derart mit Abstand zueinander angeordnet sind, dass zwischen den einzelnen Abstandsstücken 3.1 Zwischenräume 5 verbleiben, welche beim Abheben des Dünnstsubstrats 2 vom Trägersubstrat 1 die Adhäsionskräfte mindern.

Gleichzeitig wird die Gesamtdicke d_{G} durch die Auswahl der Dicke d_{A} der einzelnen Abstandsstücke 3.1 beziehungsweise des Trägersubstrats oder auch der Abstandsschicht auf ein konstantes Maß festgelegt. Sofern die Abstandsschicht mit einer sehr geringen Dicke ausgeführt ist, beispielsweise im Bereich von einigen Mikrometern (µm), ist es vorteilhaft, die Gesamtdicke durch entsprechende Einstellung der Dicke des Trägersubstrats einzustellen.

Im Bereich ihres äußeren Umfangs sind das Dünnstsubstrat 2 und das Trägersubstrat 1 mittels eines Dichtelementes 4 gegeneinander abgedichtet.

In der Figur 2 erkennt man Draufsichten auf verschiedene Ausführungsformen der Abstandsschicht 3.

In der Figur 2a ist die Abstandsschicht 3 aus einer Vielzahl von parallel zueinander mit Abstand angeordneten stabförmigen Elementen ausgebildet. Diese können zusätzlich mittels Querstreben oder Abstandselementen miteinander verbunden sein. Auch ein äußerer Rahmen zur Verbindung der einzelnen Elemente ist denkbar. Beide Maßnahmen sind jedoch nicht dargestellt. Das Abstandsstück aus der Figur 2b ist in Form eines Gitternetzes ausgebildet.

Die Figur 2c zeigt Abstandsstücke 3.1, welche kugelförmig sind und untereinander durch Distanzstücke 3.2 verbunden sind.

In der Figur 2d besteht die gezeigte Abstandsschicht aus einer Vielzahl von Abstandsstücken 3.1, welche in einem diskontinuierlichen Muster angeordnet sind, so dass die Aussparungen im mittleren Bereich des Abstandsstückes größer sind als im Randbereich.

Die Figur 3a zeigt einen Querschnitt einer Abstandsschicht 3 mit zylinderförmigen Aussparungen 3.3. Die Figur 3b zeigt eine Abstandsschicht 3 mit Aussparungen 3.3, welche sich von der Seite des Dünnstsubstrats ausgehend zu der Seite des Trägersubstrats konisch erweitern. Die Figur 3c zeigt einen Querschnitt durch eine Abstandsschicht, in welcher nur auf der dem Dünnstsubstrat zugewandten Seite Aussparungen 3.3 vorgesehen sind.

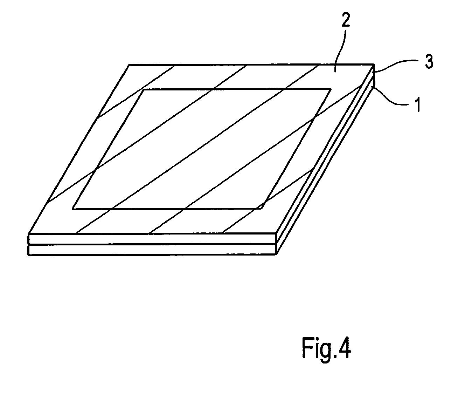

Die Figur 4 zeigt einen Verbund mit einem Dünnstsubstrat 2, das eine Dicke von weniger als 0,3 mm aufweist, welches auf ein rahmenförmiges Trägersubstrat 1 aufgebracht ist. Zwischen dem trägerförmigen Rahmensubstrat, welches einen rechtwinkligen Rahmen oder insbesondere einen quadratischen Rahmen ausbildet, und dem Dünnstsubstrat 2 ist eine Abstandsschicht 3 eingebracht. Die Abstandsschicht 3 ist ebenfalls rahmenförmig, d. h. sie umschließt einen abstandsschichtfreien Raum unterhalb des Dünstsubstrats 2.

Die Abstandsschicht 3 kann gleichzeitig eine Dichtmittelfunktion ausüben, d. h. sie dichtet das Dünnstsubstrat 3 gegenüber dem Trägersubstrat 1 entlangt des äußeren Umfangs ab. Man könnte die Abstandsschicht 3 auch als rahmenförmiges Dichtelement bezeichnen.

Um einen besonders guten Halt des Dünnstsubstrats 2 auf dem rahmenförmigen Trägersubstrat 1 zu erreichen, ist das Dünnstsubstrat insbesondere punktuell auf dem Trägersubstrat fixiert. Die punktuelle Fixierung kann beispielsweise durch Nieten, Löten oder Punktschweißen hergestellt sein. Selbstverständlich sind auch lösbare Verbindungstechniken verwendbar.

Abweichend von den vorherigen Ausführungsbeispielen, in denen die Abstandsschicht 3 im wesentlichen vollflächig zwischen dem Substrat und dem Trägersubstrat eingebracht ist und eine Vielzahl von Öffnungen aufweist, die über den gesamten Auflagebereich des Substrats auf dem Trägersubstrat verteilt angeordnet sind, weist die Abstandsschicht 3 gemäß Figur 4 lediglich eine einzige rechtwinklige Öffnung auf. Im Randbereich ist zwar ebenfalls eine flächige Auflage des Dünstsubstrats 2 auf der Abstandsschicht 3 vorgesehen, allerdings erstreckt sich diese nicht über die gesamte Substratunterseite, wie dies alternativ in den anderen Ausführungsbeispielen vorgesehen ist.

Bei der Ausführung gemäß der Figur 4 ist es abweichend von der vorhergehenden Beschreibung möglich, ausschließlich die Abstandsschicht 3 rahmenförmig auszuführen und das Trägersubstrat 1 vollflächig, d. h. beispielsweise mit einem rechtwinkligen Querschnitt. Somit wird durch die rahmenförmige Abstandsschicht 3 zwischen dem vollflächigen Dünnstsubstrat 2 und dem vollflächigen Trägersubstrat 1 ein Hohlraum eingeschlossen.

Abschließend sollen einige Vorteile des erfindungsgemäßen Verbundes nochmals zusammengefasst werden:
- Standard-LCD-Herstellungsverfahren und -einrichtungen können für die Herstellung beziehungsweise Bearbeitung von Substraten, insbesondere Dünnstsubstraten verwendet werden, wobei durch Verwendung eines Verbundes mit einem relativ dicken Trägersubstrat eine Gesamtdicke erreicht wird, die vergleichbar mit üblicherweise verwendeten Glasdicken in einer LCD-Fertigung ist. Dabei können auch Trägersubstrate, Dünnstsubstrate und Abstandsschichten mit unterschiedlicher Dicke verwendet werden, um z.B. die Gesamtdicke des Verbundes anzupassen
- Sagging wird im Vergleich zur alleinigen Verwendung von Dünnstgläsern deutlich reduziert
- das Bruchrisiko wird ebenfalls deutlich reduziert, wenn z.B. die Kante des Dünnstsubstrates etwas gegenüber der Kante des Trägersubstrates zurückgezogen wird, beispielsweise mit einem Versatz von 1 mm
- Standard-LCD-Trennungsverfahren können für die Trennung des Substrats von dem Trägersubstrat verwendet werden; und
- die Adhäsionskräfte können leichter bei der Trennung von Substrat und Trägersubstrat überwunden werden.

Bei der Trennung eines Verbundes zwischen zwei (Glas-) oberflächen können beziehungsweise müssen gegebenenfalls auch Kräfte überwunden werden, die nicht auf Van-der-Waals-Kräften beruhen. Z. B. können bei manchen Prozesschritten, insbesondere bei Vakuumprozessen (in denen der Wasserfilm entfernt wird) oder/und bei höheren Temperaturen auch chemische Bindungen (neben Wasserstoff-Brückenbindungen auch z.B. Si-O-Si) zwischen den Oberflächen entstehen, die wieder gelöst werden müssen. Auch eine solche Lösung wird durch die erfindungsgemäße Ausgestaltung des Verbundes leichter.

## Patentansprüche

1. Verbund, umfassend
1.1 ein Substrat, insbesondere ein Dünnstsubstrat (2) mit einer Dicke von weniger als 0,3 mm;
1.2 ein Trägersubstrat (1);
1.3 wobei das Substrat zumindest mittelbar mit dem Trägersubstrat (1) verbunden ist;
**dadurch gekennzeichnet, dass**
1.4 zwischen Substrat und Trägersubstrat (1) eine Abstandsschicht (3) mit Aussparungen (3.3) eingebracht ist, wobei die Aussparungen (3.3) zumindest in der Oberfläche der Abstandsschicht (3) vorgesehen sind, welche dem Substrat zugewandt ist.

2. Verbund gemäß Anspruch 1, **dadurch gekennzeichnet, dass** die Aussparungen (3) als Durchgangsöffnungen, welche die Abstandsschicht (3) von ihrer Oberfläche, die dem Substrat zugewandt ist, bis zu ihrer Oberfläche, die dem Trägersubstrat (1) zugewandt ist, durchdringen.

3. Verbund gemäß einem der Ansprüche 1 oder 2, **dadurch gekennzeichnet, dass** die Abstandsschicht (3) aus einer Vielzahl von zueinander mit regulärem oder irregulärem Abstand angeordneten Abstandsstücken (3.1) ausgebildet ist.

4. Verbund gemäß einem der Ansprüche 1 oder 2, **dadurch gekennzeichnet, dass** die Abstandsschicht (3) durch eine Gitternetzstruktur gebildet ist.

5. Verbund gemäß einem der Ansprüche 1 oder 2, **dadurch gekennzeichnet, dass** die Abstandsschicht (3) aus einer Vielzahl von parallel zueinander mit Abstand angeordneten Stäben (3.1) gebildet ist.

6. Verbund gemäß Anspruch 5, **dadurch gekennzeichnet, dass** die Stäbe (3.1) einen kreisrunden, ovalen, rechtwinkligen oder quadratischen Querschnitt aufweisen.

7. Verbund gemäß Anspruch 3, **dadurch gekennzeichnet, dass** die Abstandsstücke (3.1) einzelne Kugeln sind, welche insbesondere durch Distanzstäbe (3.2) miteinander verbunden sind.

8. Verbund gemäß einem der Ansprüche 1 bis 7, **dadurch gekennzeichnet, dass** das Verhältnis der ausgesparten Fläche zur Gesamtfläche der dem Dünnstsubstrat zugewandeten Oberfläche der Abstandsschicht (3) zwischen 0,1 und 0,9999, insbesondere 0,99 beträgt.

9. Verbund gemäß einem der Ansprüche 2 bis 8, **dadurch gekennzeichnet, dass** die Aussparungen (3.3) von der dem Substrat zugewandten Oberfläche der Abstandsschicht (3) bis zur dem Trägersubstrat (1) zugewandten Oberfläche der Abstandsschicht (3) einen gleichförmigen Querschnitt aufweisen.

10. Verbund gemäß einem der Ansprüche 2 bis 8, **dadurch gekennzeichnet, dass** die Aussparungen (3.3) von der dem Substrat zugewandten Oberfläche der Abstandsschicht (3) bis zur dem Trägersubstrat (1) zugewandten Oberfläche der Abstandsschicht (3) einen konischen Querschnitt aufweisen.

11. Verbund gemäß Anspruch 10, **dadurch gekennzeichnet, dass** der Querschnitt der Aussparungen (3.3) ausgehend von der dem Substrat zugewandten Oberfläche der Abstandsschicht (3) bis zur dem Trägersubstrat (1) zugewandten Oberfläche der Abstandsschicht (3) konisch erweitert sind.

12. Verbund gemäß einem der Ansprüche 1 bis 11, **dadurch gekennzeichnet, dass** die Abstandsschicht (3) aus einem Kunststoff oder Polymer oder Glas oder aus einem kunststoff-, polymer- oder glashaltigem Werkstoff besteht.

13. Verbund gemäß einem der Ansprüche 1 bis 12, **dadurch gekennzeichnet, dass** der Verbund eine Gesamtdicke von 0,4 mm bis 1,1 mm aufweist, insbesondere eine Gesamtdicke von 0,5 mm.

14. Verbund gemäß einem der Ansprüche 1 bis 13, **dadurch gekennzeichnet, dass** die Abstandsschicht und/oder das Trägersubstrat als Austauschteil mit unterschiedlicher Dicke ausgebildet ist/sind, welche(s) unterschiedliche Dicken von Substraten und/oder Trägersubstraten (1) derart ausgleicht/ausgleichen, dass die Gesamtdicke des Verbundes stets ein vorgegebenes konstantes Maß aufweist.

15. Verbund gemäß einem der Ansprüche 1 bis 14, **dadurch gekennzeichnet, dass** das Substrat mit der Abstandsschicht (3) und die Abstandsschicht (3) mit dem Trägersubstrat (1) lösbar verbunden ist.

16. Verbund gemäß einem der Ansprüche 1 bis 14, **dadurch gekennzeichnet, dass** das Substrat lösbar mit der Abstandsschicht (3) und die Abstandsschicht (3) unlösbar oder integral mit dem Trägersubstrat (1) verbunden ist, wobei insbesondere Abstandsschicht (3) und Trägersubstrat (1) gemeinsam das Austauschteil gemäß Anspruch 14 bilden.

17. Verbund gemäß einem der Ansprüche 1 bis 14, **dadurch gekennzeichnet, dass** das Substrat direkt mit dem Trägersubstrat (1) lösbar verbunden ist.

18. Verbund gemäß einem der Ansprüche 1 bis 17, **dadurch gekennzeichnet, dass** das Trägersubstrat (1) aus Glas oder einem glashaltigen Werkstoff hergestellt ist.

19. Verbund gemäß einem der Ansprüche 1 bis 18, **dadurch gekennzeichnet, dass** das Substrat und das Trägersubstrat (1) im Bereich ihres äußeren Umfangs miteinander verbunden sind.

20. Verbund gemäß einem der Ansprüche 1 bis 19, **dadurch gekennzeichnet, dass** die Abstandsschicht (3) und insbesondere das Trägersubstrat (1) rahmenförmig ausgebildet sind und eine Aussparung umschließen.

21. Verbund gemäß Anspruch 20, **dadurch gekennzeichnet, dass** die Abstandsschicht (3) ein Dichtelement zwischen Substrat und Trägersubstrat (1) ausbildet.

22. Verbund gemäß einem der Ansprüche 20 oder 21, **dadurch gekennzeichnet, dass** das Substrat und das Trägersubstrat (1) punktuell aneinander fixiert sind, insbesondere durch Nieten, Löten und/oder Punktschweißen.

23. Verfahren zur Behandlung und/oder Bearbeitung und/oder zum Transport eines Substrats, insbesondere Dünnstsubstrats mit einer Dicke von weniger als 0,3 mm mit folgenden Schritten:
23.1 das Substrat wird zumindest mittelbar mit einem Trägersubstrat (1) lösbar verbunden; wobei
23.2 eine Abstandsschicht (3) zwischen Substrat und Trägersubstrat (1) eingefügt wird, so dass sich ein Verbund gemäß einem der Ansprüche 1 bis 22 ergibt;
23.3 der Verbund wird behandelt und/oder bearbeitet und/oder transportiert;
23.4 nach Abschluss der Behandlung und/oder der Bearbeitung und/oder des Transports wird das Substrat vom Trägersubstrat (1) gelöst.

24. Verfahren gemäß Anspruch 23, **dadurch gekennzeichnet, dass** das Verbinden durch Verkleben und/oder ein thermisches Verbindungsverfahren erfolgt, insbesondere durch Aufschmelzen.

25. Verfahren gemäß Anspruch 23 oder 24, **dadurch gekennzeichnet, dass** das Lösen durch Brechen des Trägersubstrates (1), insbesondere durch Anritzen der Oberfläche mit abschließendem Biegen des Trägersubstrats (1) erfolgt, wobei das Trägersubstrat (1) insbesondere aus Glas ausgebildet ist.

26. Verfahren gemäß einem der Ansprüche 23 bis 25, **dadurch gekennzeichnet, dass** das Lösen durch Ritzen und Brechen des Dünnstsubstrates erfolgt.
